# EUROPÄISCHE PATENTANMELDUNG

(11) **EP 2 138 449 A2**
(43) Veröffentlichungstag der Anmeldung: **30.12.2009**
(21) Anmeldenummer: 09007535.9
(22) Anmeldetag: 08.06.2009
(51) Int. Cl.: B67D 1/08

(54) **Vorrichtung zum Zapfen von Trinkflüssigkeiten**

(30) Priorität: 06.06.2008 DE 102008027289
(71) Anmelder: Lüdi, Hugues, 8634 Hombrechtikon (CH); Neuenschwander, Martin, 3034 Murzelen (CH)
(72) Erfinder: Lüdi, Hugues, 8634 Hombrechtikon (CH); Neuenschwander, Martin, 3034 Murzelen (CH)
(74) Vertreter: Geitz Truckenmüller Lucht

(57) **Zusammenfassung**

Es wird eine Vorrichtung zum Zapfen von Trinkflüssigkeiten wie Trinkwasser oder aus Trinkwasser zubereitete heiße oder kalte Getränke oder Suppen vorgeschlagen mit einem Gehäuse, mit mindestens einem Vorratsbehälter (1) für das Trinkwasser und/ oder mit einem Anschluss (9) an das öffentliche Netz der Trinkwasserversorgung, mit mindestens einem an dem Gehäuse angeordneten Zapfhahn oder Zapfventil (12, 14), mit einer Trinkflüssigkeitsleitung (3, 11, 13) in dem Gehäuse, welche den Zapfhahn oder das Zapfventil (12, 14) mit dem Vorratsbehälter (1) oder mit dem Anschluss (9) an das öffentliche Netz der Trinkwasserversorgung verbindet, mit einer Desinfektionseinrichtung (5, 7, 9, 19, 20) zum Desinfizieren der Trinkflüssigkeitsleitung (3, 11, 13) und/oder des Vorratsbehälters (1).

## Beschreibung

### Stand der Technik

Die Erfindung geht aus von einem Trinkwasserspender nach dem Oberbegriff des Anspruchs 1.

Derartige Vorrichtungen dienen dazu, Trinkflüssigkeiten wie beispielsweise Trinkwasser, Erfrischungsgetränke, Heißgetränke wie Kaffee, Tee, heiße Schokolade oder Suppen zur Verfügung zu stellen. Die gewünschte Menge an Trinkflüssigkeit kann über einen Zapfhahn aus einem Vorratsbehälter oder aus dem öffentlichen Netz der Trinkwasserversorgung entnommen werden. Dem Trinkwasser können in der Vorrichtung Geschmacks- oder sonstige Zusatzstoffe beigemischt werden. Darüber hinaus kann das Trinkwasser für die Zubereitung von heißer Schokolade, Kaffee, Tee oder Suppen eingesetzt werden. In diesem Fall wird das Trinkwasser mit den für die Zubereitung notwendigen Substanzen gemischt. Die Vorrichtung weist dabei alle für das Zapfen und Zurverfüngungstellen der Trinkflüssigkeit notwendigen Komponenten auf. Zum Aufstellen und Installieren der Vorrichtung sind lediglich ein Stromanschluss und gegebenenfalls ein Anschluss an die öffentliche Trinkwasserversorgung notwendig.

### Die Erfindung und ihre Vorteile

Die Vorrichtung mit den Merkmalen des Anspruchs 1 weist den Vorteil auf, dass die Trinkflüssigkeit im Vorratsbehälter und/ oder die Trinkflüssigkeitsleitung mittels einer Desinfektionseinrichtung desinfiziert wird. Damit kann es auch bei längeren Standzeiten nicht zu einer Verunreinigung mit Bakterien, Viren oder Keimen kommen. Hierzu wird beispielsweise ein Desinfektionsmittel wie Chlor, Ozon, ein Brom-Chlorid-Gemisch oder Natriumhyperchlorid in die Trinkflüssigkeitsleitung eingebracht. Das Desinfektionsmittel kann hierzu in einen Behälter abgefüllt sein, beispielsweise in eine Kartusche oder Patrone. Diese kann lösbar mit der Vorrichtung verbunden werden und an die Trinkflüssigkeitsleitung und/ oder den Vorratsbehälter gekoppelt werden. Die Entnahme des Desinfektionsmittels aus dem Behälter kann automatisch erfolgen, wenn durch die Trinkflüssigkeitsleitung eine Flüssigkeit strömt. Hierzu kann entweder an dem Behälter des Desinfektionsmittels oder an der Trinkflüssigkeitsleitung ein bei Infusionen bekannter Tropfenzähler, ein Dosierventil oder eine Pumpe vorgesehen sein. Der Behälter, insbesondere die Patrone oder Kartusche kann beispielsweise mit Chlor, Ozon, einem Brom-Chlorid-Gemisch oder Natriumhyperchlorid oder Mischungen der genannten Desinfektionsmittel gefüllt sein. Das Desinfektionsmittel ist bevorzugt mit Wasser gemischt. Ist die Vorrichtung mit einem Tropfenzähler oder einem Dosierventil ausgestattet, so bewirken diese eine automatische Dosierung, die beim Zapfen einer Trinkflüssigkeit oder zu bestimmten vorgegebenen Zeitpunkten ausgelöst wird. In diesem Fall wird automatisch aus einem Desinfektionsmittel-Vorratsbehälter durch den Tropfenzähler oder das Dosierventil eine vorgegebene Menge an Desinfektionsmittel entnommen und in die Trinkflüssigkeitsleitung eingeleitet. Eine Steuerungseinrichtung kann dafür sorgen, dass das Desinfektionsmittel entweder nur bei Entnahme einer Trinkflüssigkeit oder in bestimmten Zeitintervallen unabhängig von dem Zapfvorgang in die Trinkflüssigkeit gegeben wird.

Zum Desinfizieren kann darüber hinaus ionisiertes Wasser eingesetzt werden. Hierzu ist das ionisierte Wasser in einen Behälter abgefüllt, der in die Vorrichtung eingesetzt werden kann. Beim Ankoppeln des Behälters an die Trinkflüssigkeitsleitung wird bereits über einen mechanischen Volumendosierer ein Menge an ionisiertem Wasser entnommen und in die Trinkflüssigkeitsleitung eingeleitet.

Nach einer vorteilhaften Ausgestaltung ist die Vorrichtung mit einer Heizeinrichtung ausgestattet. Dabei kann es sich beispielsweise um einen Durchlauferhitzer, einen Dampferzeuger oder einen Mikrowellenherd handeln. Die Heizeinrichtung dient zum einen zum Erhitzen der Trinkflüssigkeit zur Zubereitung von Heißgetränken oder Suppen und zum anderen zur Desinfektion der Trinkflüssigkeitsleitung. Die Desinfektionseinrichtung ist mit einem Ventil und einer Überbrückungsleitung ausgestattet, um die erhitzte Trinkflüssigkeit auch in den Abschnitt der Trinkflüssigkeitsleitung zu leiten, der dem Zapfen von kalter Trinkflüssigkeit dient. Es kann auch eine weitere Pumpe vorgesehen sein, die die erhitzte Trinkflüssigkeit in den Trinkflüssigkeitsleitungen zirkulieren lässt. Zur Desinfektion wird die Trinkflüssigkeitsleitung in vorgegebenen Zeitintervallen oder vor bzw. nach der Entnahme von Trinkflüssigkeit über den Zapfhahn mit erhitztem Wasser gespült. Hierzu sollte das Wasser mindestens eine Temperatur von 73°C aufweisen. Besonders geeignet ist ein Temperaturbereich zwischen 93 und 98°C.

Für den Fall, dass eine Trinkflüssigkeitsleitung für kalte Trinkflüssigkeiten und einer zweite Trinkflüssigkeitsleitung für heiße Trinkflüssigkeiten in der Vorrichtung vorgesehen sind, kann die Vorrichtung zum Desinfizieren mit einer überbrückenden Leitung und einem Ventil ausgestattet sein. So wird das Spülen der Trinkflüssigkeitsleitung für kalte Trinkflüssigkeiten mit heißen Wasser oder Dampf ermöglicht.

Der Mikrowellenherd kann außerdem zum Aufwärmen von Speisen oder bereits erkalteten Getränken verwendet werden.

Nach einer vorteilhaften Ausgestaltung der Erfindung ist die Heizeinrichtung direkt an der Trinkflüssigkeitsleitung angeordnet.

Nach einer weiteren vorteilhaften Ausgestaltung der Erfindung ist sie mit einer Steuereinrichtung ausgestattet.

Nach einer weiteren vorteilhaften Ausgestaltung der Erfindung ist die Vorrichtung mit einem Computer mit Eingabeeinrichtung, beispielsweise einer Tastatur oder einem Touchscreen, und mit einem Monitor ausgestattet. Dieser dient zum einen zum Auswählen verschiedener Trinkflüssigkeiten und zum anderen zur Steuerung der Desinfektionseinrichtung. Darüber hinaus kann der Computer an das Internet anschließbar sein. In diesem Fall ist eine Fernüberwachung der Vorrichtung möglich. Ein Kunde kann den Computer ferner nutzen um eine Datenabfrage über das Internet oder einen Datenaustausch mit anderen Computern vorzunehmen. Die Kommunikation kann optisch und/ oder akustisch erfolgen. Bei den Daten kann es sich beispielsweise um Informationen für interne oder externe Mitarbeiter eines Unternehmens, um Werbeinformationen, um Fahrtplaninformationen, um Empfangs- und Hinweisinformation an einer unbesetzten Portierloge, um Sicherheitsinformationen und Anweisungen handeln.

Nach einer weiteren vorteilhaften Ausgestaltung der Erfindung ist die Vorrichtung mit einer Werbeeinrichtung ausgestattet. Dabei kann es sich um einen Bildschirm mit wechselnden Werbeanzeigen, einen Lautsprecher zur akustischen Ausgabe von Werbeanzeigen oder ein Werbeplakat oder Aufkleber handeln. Die Vorrichtung kann ferner mit einer Leseeinrichtung zum Lesen von in einem Speicher abgelegten Daten ausgestattet sein. Schließlich kann die Vorrichtung mit einer Ausgabeeinrichtung zum Ausgeben von auf Papier, Pappe oder Karton abgedruckten Informationen wie beispielsweise Broschüren und Kundeninformationen ausgestattet sein.

Weitere Vorteile, vorteilhafte Ausgestaltungen sind der nachfolgenden Beschreibung, der Zeichnung und den Ansprüchen zu entnehmen.

### Zeichnung

In der Zeichnung ist ein Ausführungsbeispiel der Erfindung dargestellt. Es zeigt:

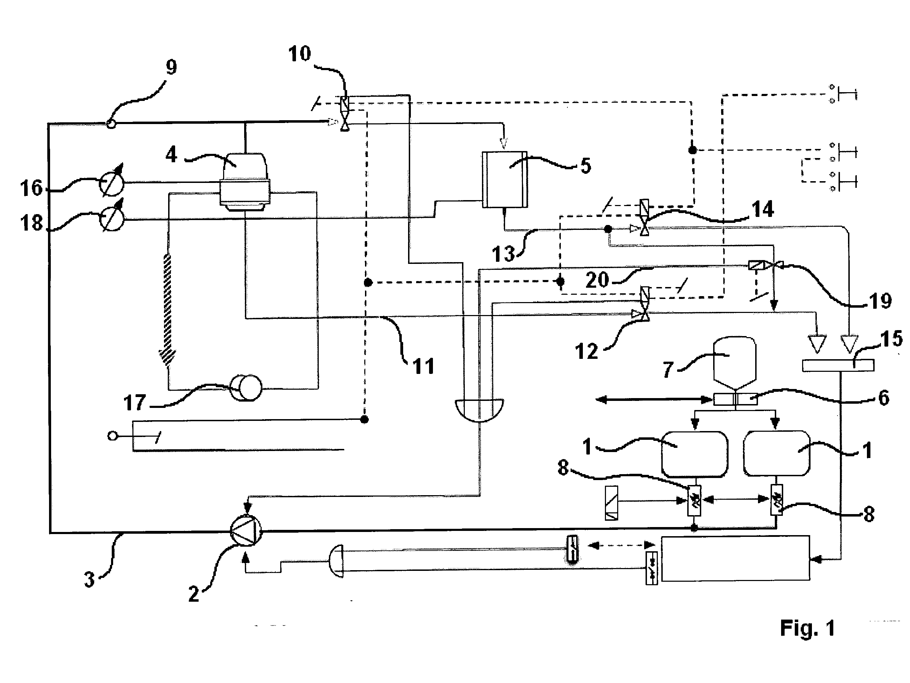

- Figur 1: Schematischer Aufbau einer Vorrichtung zum Zapfen von Trinkflüssigkeiten.

### Beschreibung des Ausführungsbeispiels

In Figur 1 ist der schematische Aufbau einer Vorrichtung zum Zapfen von Trinkflüssigkeiten dargestellt. Zwei Vorratsbehälter 1 für das Trinkwasser sind über eine Pumpe 2 und einer Trinkflüssigkeitsleitung 3 mit einer Kühleinrichtung 4 und einer Heizeinrichtung 5 verbunden. Über eine mechanische Dosiereinrichtung 6 wird ionisiertes Wasser aus einem Behälter 7 in die Vorratsbehälter 1 eingeleitet. Zwischen den Vorratsbehältern 1 und der Pumpe 2 sind zwei Patronen 8 angeordnet, welche Ozon enthalten. Das Trinkwasser wird durch die Patronen geleitet und dabei desinfiziert. Auch das ionisierte Wasser aus dem Behälter 7 hat eine desinfizierende Wirkung. Über den Anschluss 9 kann die Vorrichtung an das Netz der Trinkwasserversorgung angeschlossen werden. Ein Ventil 10 ist geschlossen, sofern kaltes Trinkwasser an der Vorrichtung gezapft werden soll. In diesem Fall gelangt das Trinkwasser zu dem Kühler und wird dort gekühlt. Über eine Trinkflüssigkeitsleitung 11 und ein Zapfventil 12 für gekühltes Trinkwasser kann das gekühlte Trinkwasser durch einen Benutzer entnommen werden. Ist das Ventil 10 geöffnet, so strömt das Trinkwasser nicht zu der Kühleinrichtung 4 sondern zu der Heizeinrichtung 5. Über eine Trinkflüssigkeitsleitung 13 und ein Zapfventil 14 für erwärmtes oder erhitztes Trinkwasser kann das warme Trinkwasser durch einen Benutzer entnommen werden. Unterhalb der beiden Zapfventile 12 und 14 befindet sich eine Auffangschale 15 für Rest- oder Tropfwasser. Ist die Auffangschale voll, so bleibt die Pumpe 2 ausgeschaltet, bis die Auffangschale 15 entleert wird.

Der Kühlkreislauf der Kühleinrichtung 3 weist eine Temperaturregelung 16 und einen Kompressor 17 auf. An der Heizeinrichtung 5 ist ebenfalls eine Temperaturregelung 18 vorgesehen.

Über ein Ventil 19 und eine Leitung 20 kann das durch die Heizeinrichtung 5 erhitzte Trinkwasser von der Trinkflüssigkeitsleitung 13 in die Trinkflüssigkeitsleitung 11 für gekühltes Trinkwasser eingeleitet werden, um diese Trinkflüssigkeitsleitung mit heißem Trinkwasser zu desinfizieren. Das Ventil 19 ist geschlossen, solange über die Zapfventile 12 und 14 Trinkwasser gezapft wird. Während des Spülens der Trinkflüssigkeitsleitungen 11 und 13 kann kein Trinkwasser entnommen werden. In diesem Fall sind die beiden Zapfventile 12 und 14 gesperrt.

Sämtliche Merkmale der Erfindung können sowohl einzeln als auch in beliebiger Kombination miteinander erfindungswesentlich sein.

### Bezugszahlen

- 1: Vorratsbehälter
- 2: Pumpe
- 3: Trinkflüssigkeitsleitung
- 4: Kühleinrichtung
- 5: Heizeinrichtung
- 6: mechanische Dosiereinrichtung
- 7: Behälter mit ionisiertem Wasser
- 8: Patrone mit Ozon
- 9: Anschluss
- 10: Ventil
- 11: Trinkflüssigkeitsleitung für gekühltes Trinkwasser
- 12: Zapfventil für gekühltes Trinkwasser
- 13: Trinkflüssigkeitsleitung für erwärmtes Trinkwasser
- 14: Zapfventil für erwärmtes Trinkwasser
- 15: Auffangschale
- 16: Temperaturregelung
- 17: Kompressor
- 18: Temperaturregelung
- 19: Ventil
- 20: Leitung

## Patentansprüche

1. Vorrichtung zum Zapfen von Trinkflüssigkeiten wie Trinkwasser oder aus Trinkwasser zubereitete heiße oder kalte Getränke oder Suppen mit einem Gehäuse,
mit mindestens einem Vorratsbehälter (1) für das Trinkwasser und/ oder mit einem Anschluss (9) an das öffentliche Netz der Trinkwasserversorgung,
mit mindestens einem an dem Gehäuse angeordneten Zapfhahn oder Zapfventil (12, 14),
mit einer Trinkflüssigkeitsleitung (3, 11, 13) in dem Gehäuse, welche den Zapfhahn oder das Zapfventil (12, 14) mit dem Vorratsbehälter (1) oder mit dem Anschluss (9) an das öffentliche Netz der Trinkwasserversorgung verbindet,
mit einer Desinfektionseinrichtung (5, 7, 9, 19, 20) zum Desinfizieren der Trinkflüssigkeitsleitung (3, 11, 13) und/ oder des Vorratsbehälters (1).

2. Vorrichtung nach Anspruch 1, **dadurch gekennzeichnet, dass** die Desinfektionseinrichtung (7, 9) ein Desinfektionsmittel in die Trinkflüssigkeitsleitung (3, 11, 13) und/ oder den Vorratsbehälter (1) einbringt.

3. Vorrichtung nach Anspruch 2, **dadurch gekennzeichnet, dass** die Desinfektionseinrichtung mit einer Dosiereinrichtung (6) ausgestattet ist.

4. Vorrichtung nach Anspruch 2 oder 3, **dadurch gekennzeichnet, dass** die Desinfektionseinrichtung mit mindestens einer Kartusche oder Patrone (8) ausgestattet ist, welche das Desinfektionsmittel enthält.

5. Vorrichtung nach einem der vorhergehenden Ansprüche, **dadurch gekennzeichnet, dass** sie mit einer Heizeinrichtung (5) zum Erhitzen der Trinkflüssigkeit ausgestattet ist, und dass die Desinfektionseinrichtung mit einer Flüssigkeitsleitung (20), einem Ventil (19) und/ oder einem Hahn ausgestattet ist um die erhitzte Trinkflüssigkeit durch die Trinkflüssigkeitsleitung (3, 11, 13) und/ oder den Vorratsbehälter (1) zu leitet.

6. Vorrichtung nach Anspruch 5, **dadurch gekennzeichnet, dass** die Heizeinrichtung (5) ein Durchlauferhitzer ist.

7. Vorrichtung nach Anspruch 5, **dadurch gekennzeichnet, dass** die Heizeinrichtung (5) ein Dampferzeuger ist.

8. Vorrichtung nach Anspruch 5, **dadurch gekennzeichnet, dass** die Heizeinrichtung (5) ein Mikrowellenherd ist.

9. Vorrichtung nach einem der vorhergehenden Ansprüche, **dadurch gekennzeichnet, dass** sie mit einem Computer zum Steuern der Desinfektionseinrichtung ausgestattet ist.

10. Vorrichtung nach Anspruch 11, **dadurch gekennzeichnet, dass** sie mit einem Lautsprecher zur akustischen Ausgabe von Informationen ausgestattet ist.
